Europäisches Patentamt

European Patent Office

Office européen des brevets

(11) Numéro de publication: **0 129 222**
**A2**

## (12) DEMANDE DE BREVET EUROPEEN

(21) Numéro de dépôt: 84106834.9

(22) Date de dépôt: 15.06.84

(51) Int. Cl.³: **A 47 J 42/56**
**B 26 D 7/24, F 16 P 3/08**

(30) Priorité: 17.06.83 ES 523632

(43) Date de publication de la demande:
27.12.84 Bulletin 84/52

(84) Etats contractants désignés:
AT BE CH DE FR GB IT LI NL SE

(71) Demandeur: MOULINEX S.A.
7 à 15, rue Jules-Ferry
F-93171 Bagnolet(FR)

(72) Inventeur: Biarnes Bulto, Salvador
Sociéte Moulinex Espana S.A. Avda Diagonal 622
7 - Barcelona(ES)

(74) Mandataire: May, Hans Ulrich
Thierschstrasse 27
D-8000 München 22(DE)

(54) Dispositif de commande d'un appareil électroménager.

(57) La mise en marche de l'appareil est commandée par un curseur (4) qui coulisse verticalement et qui porte un doigt (6) destiné à agir sur la touche (7) d'un interrupteur (1). Cette action sur la touche (7) est subordonnée à l'interposition d'un bras (5) entre le doigt (6) et cette touche, ce bras (5) étant lui-même en ladite position d'interposition par un bossage (9) solidaire du verrou (3) de fermeture du couvercle (2) de l'appareil.

Ainsi, l'interrupteur (1) peut fonctionner seulement lorsque le couvercle est posé sur l'appareil et lorsque, de plus, le verrou (3) est correctement fermé.

EP 0 129 222 A2

./...

Fig 1

- 1 -

Dispositif de commande d'un appareil électroménager

La présente invention concerne les dispositifs de commande d'appareils électroménagers comportant un mécanisme de verrouillage de sécurité.

Ces dispositifs de commande à verrouillage de sécurité sont indispensables pour un grand nombre d'appareils dans lesquels un actionnement intempestif pourrait provoquer des accidents. On doit inclure dans cette catégorie les appareils électroménagers, pour lesquels il n'est possible, ni d'attendre de l'usager une grande dextérité dans le maniement des organes mécaniques, ni d'exiger de lui qu'il prenne des précautions excessives préalablement au fonctionnement, puisque l'on souhaite au contraire un maniement commode et rapide de ces appareils. D'autre part, les exigences croissantes des normes de sécurité concernant l'utilisation de ces appareils poussent les fabricants à assurer cette sécurité de façon de plus en plus automatique, c'est-à-dire sans exiger d'attention particulière de la part de l'usager.

L'invention concerne plus précisément un mécanisme de verrouillage de sécurité interposé entre la commande manuelle de l'alimentation électrique du moteur et le couvercle de fermeture de l'appareil, ce mécanisme étant applicable à tout appareil comportant un couvercle amovible permettant d'introduire ou d'extraire de l'appareil des denrées à traiter.

L'invention a pour but d'obtenir la sécurité automatique de fonctionnement de manière économique, ce qui constitue une nécessité pour les appareils de grande consommation pour lesquels on recherche à la fois une/qualité
,bonne
et un faible coût de fabrication.

Le dispositif de sécurité selon l'invention est caractérisé en ce qu'il comprend un curseur actionné manuellement à déplacement rectiligne coulissant entre des glissières parallèles, ce curseur portant un doigt perpendiculaire au plan des glissières et destiné à l'actionnement d'un interrupteur électrique de mise en marche de l'appareil, l'actionnement de cet interrupteur étant subordonné à l'interposition d'un élément intermédiaire formé par un bras élastique qui peut basculer dans deux plans perpendiculaires entre eux, l'un de ces plans étant pratiquement parallèle au plan des glissières et l'autre perpendiculaire à ce plan, le déplacement dudit bras dans le plan perpendiculaire au plan des glissières étant provoqué par l'action d'un bossage solidaire du levier ou autre organe de fixation du couvercle sur l'appareil, tandis que le déplacement dans l'autre plan est provoqué par l'actionnement du curseur de mise en marche de l'appareil.

Ainsi, lorsque le levier ou autre organe de fermeture de l'appareil est amené en sa position active, il provoque le premier desdits déplacements de l'élément intermédiaire, c'est-à-dire celui situé dans le plan perpendiculaire au plan des glissières, ce qui constitue une condition préalable indispensable pour que le curseur d'actionnement puisse, lors de son mouvement normal, provoquer le second déplacement, c'est-à-dire celui situé dans le plan parallèle au plan des glissières, duquel résulte la mise en marche de l'appareil. Par conséquent, il est indispensable, non seulement que le couvercle soit mis en place, mais encore qu'il soit convenablement fixé, pour que l'on puisse actionner la commande de mise en marche de l'appareil. Ceci assure un degré maximum de sécurité.

On notera par ailleurs que l'élément intermédiaire formant l'organe essentiel de ce dispositif de sécurité peut être constitué par une pièce moulée en matériau élastique, donc de réalisation simple et économique.

Les caractéristiques et avantages de l'invention ressortiront d'ailleurs de la description qui va suivre, à titre d'exemple, en référence aux dessins annexés dans lesquels :

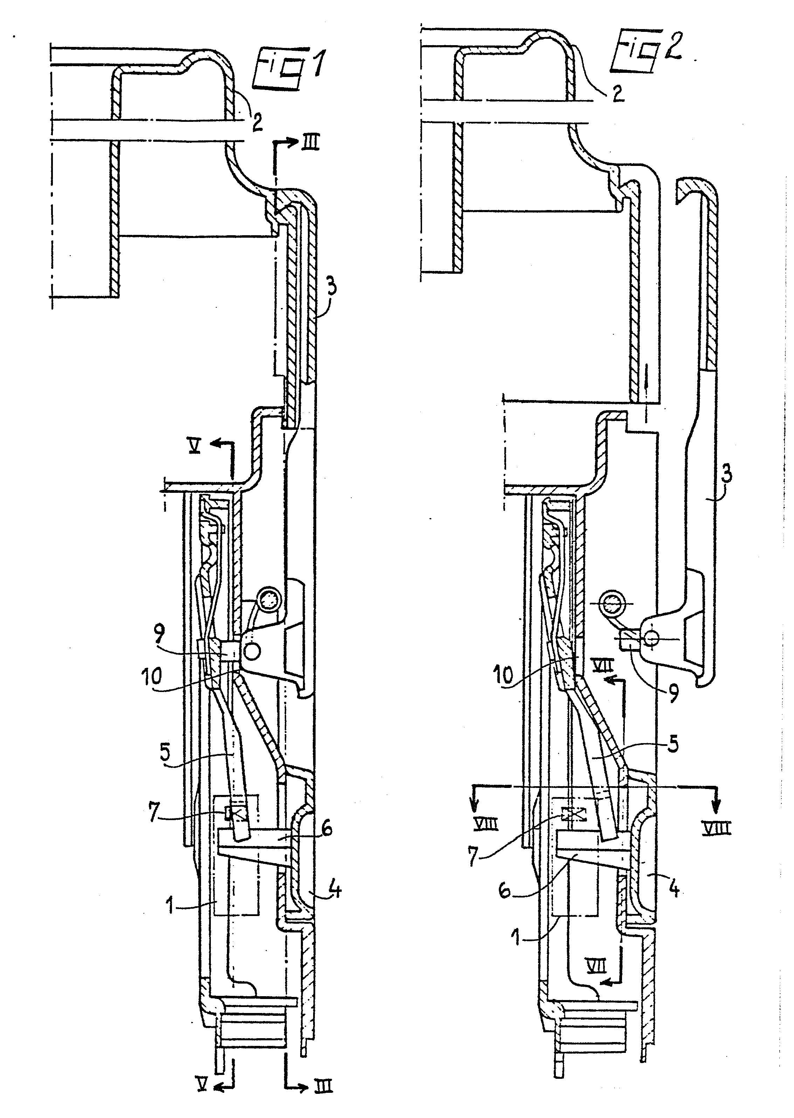

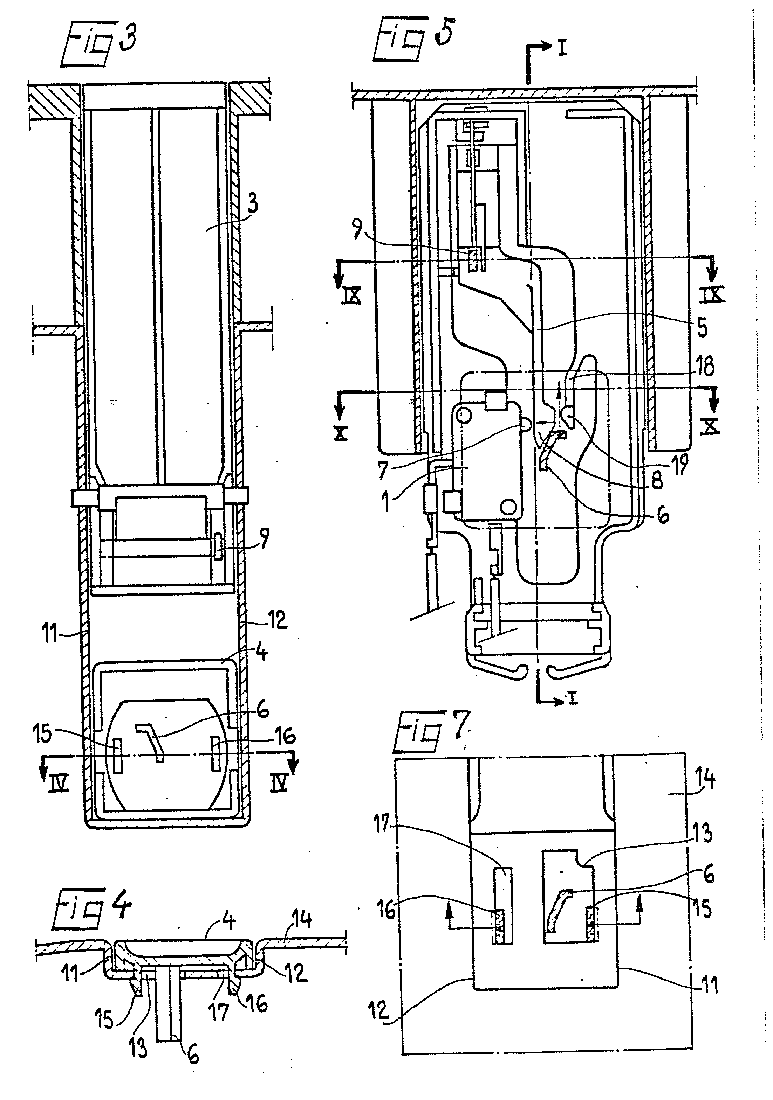

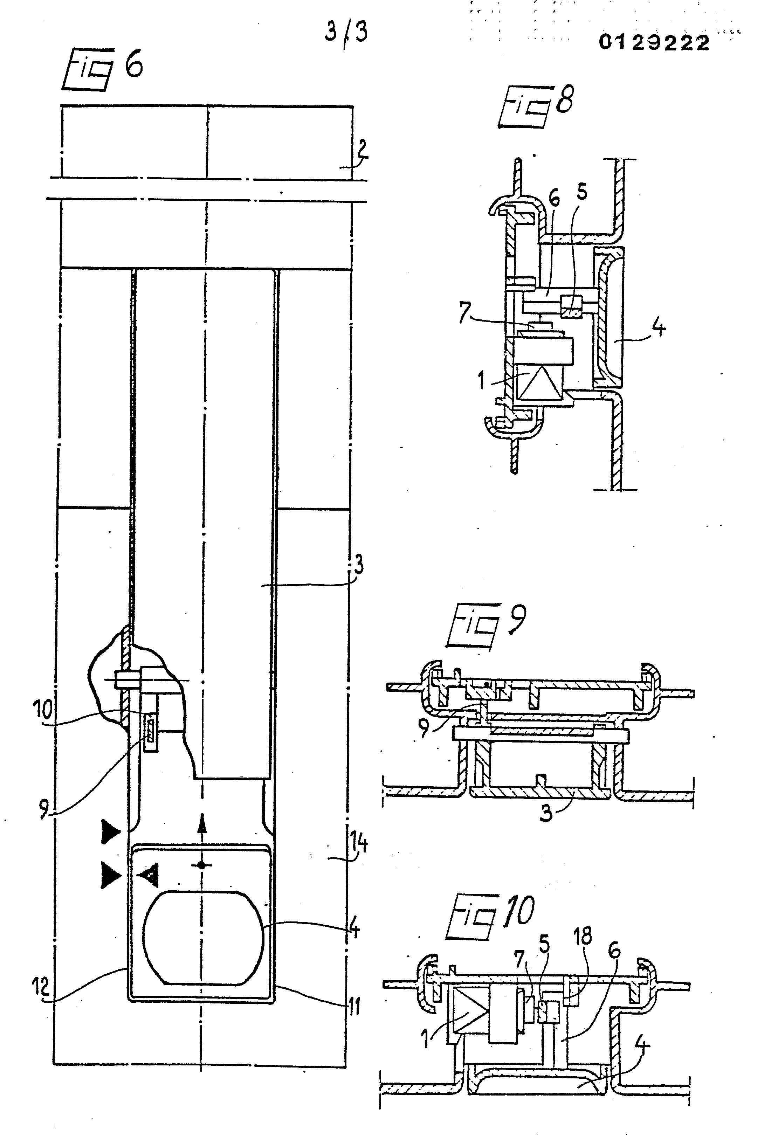

les figures 1 et 2 sont des coupes verticales du mécanisme d'actionnement et de verrouillage d'un appareil électroménager selon l'invention, respectivement en position de fermeture complète et d'ouverture du couvercle ; la figure 3 représente ce mécanisme en coupe selon la ligne III-III de la figure 1 ; la figure 4 est une coupe transversale du curseur manuel d'actionnement selon la ligne IV-IV de la figure 3 ; la figure 5 est une coupe selon la ligne V-V de la figure 1, montrant en élévation la pièce qui subit l'action du curseur d'actionnement et du levier de fermeture ; la figure 6 montre, vu de l'extérieur, l'ensemble formé par le levier de fixation du couvercle et par le curseur d'actionnement ; les figures 7, 8, 9 et 10 sont des vues de détail qui montrent en coupe les positions relatives de divers organes et en particulier du curseur et de ses glissières.

Comme représenté sur ces dessins, le mécanisme selon l'invention est destiné à lier la commande d'actionnement d'un interrupteur électrique 1 de mise en marche à la fermeture du couvercle 2 de l'appareil, de manière qu'il ne soit pas possible d'actionner l'interrupteur 1, non seulement tant que le couvercle 2 n'est pas placé en sa position de fermeture, mais encore tant que les organes de fermeture, constitués en ce cas par des leviers 3, ne sont pas placés en leur position de verrouillage correct, de manière à rendre impossible la mise en marche de l' appareil tant que ce couvercle 2 n'est pas convenablement bloqué.

Pour atteindre ce but, l'invention prévoit de disposer un organe intermédiaire entre l'interrupteur 1 et le curseur manuel d'actionnement 4 destiné à provoquer la mise en marche.

Pour cela, on dispose un bras basculant intermédiaire 5 entre un doigt 6 porté par le curseur 4 et la touche 7 d'actionnement de l'interrupteur 1, de telle manière que , pour que le doigt 6 puisse provoquer l'actionnement de la touche 7, il soit nécessaire que le bras 5 se trouve en position coplanaire avec la touche 7, de sorte que l'actionnement du curseur 4 puisse donner lieu, au moyen du doigt 6, à l'actionnement de la touche 7 par l'intermédiaire de la tête d'extrémité 8 du bras basculant 5. Pour cela, l'invention prévoit que le bras 5 se trouve normalement en une position transversalement espacée du plan de la touche 7 ; en cette position, comme représenté à la figure 2, le bras 5, du fait de sa propre élasticité (éventuellement aidée par un ressort), tend à s'éloigner du plan de la touche 7 de l'interrupteur 1. En outre l'invention prévoit que le déplacement du bras 5 vers la position coplanaire en vue de l'actionnement de la touche 7 soit provoqué par un bossage 9 formant partie du levier de fermeture 3 ; ainsi, comme représenté à la figure 1, la mise en place du levier 3 en sa position convenable d'accrochage du couvercle entraîne l'introduction du bossage 9 vers l'intérieur du boîtier de l'
appareil à travers une ouverture 10 du boîtier, et la
poussée de ce bossage sur une partie du bras 5, ce qui
produit le basculement de ce bras jusqu'à amener son extrémité 8 en position coplanaire avec la touche 7 (figure 1).

Dans les conditions ci-dessus décrites, une fois que
l'on a monté le couvercle 2 et que l'on a placé le levier d'accrochage 3 en sa position correcte (figure 1),
l'ensemble parvient en position d'actionnement, de manière que le curseur 4 provoque, lors de son déplacement
vers le haut, le déplacement latéral du bras 5 et par
suite l'actionnement de l' interrupteur 1.

Comme représenté sur les figures, l'invention prévoit que
le curseur manuel 4 est agencé dans des glissières rectilignes 11 et 12 formées par les bords d'une dépression
latérale du boîtier 14 de l'appareil, de manière que la
face externe du curseur 4 se situe dans le plan de la
surface latérale du boîtier sans faire saillie de celleci. On prévoit en outre que le curseur 4 comporte sur sa
face postérieure des ergots 15 et 16 engagés dans des
fentes 13 et 17 du fond de la dépression, de manière que
les petites saillies latérales des ergots15 et 16 soient
accrochées derrrière la paroi de fond de ladite dépression,
ce qui empêche l'échappement du curseur 4 vers l'extérieur.

Outre le bras basculant 5, on prévoit un second bras de
retenue 18 (figure 5) qui porte un appendice 19 présentant
une rampe d'entrée inclinée, similaire à celle de la tête
8 du bras 5, afin de permettre une meilleure attaque du
doigt 6 solidaire du curseur 4 ainsi que sa retenue en
la position active.

Grâce au dispositif ainsi réalisé, on obtient une grande
sécurité de fonctionnement de l'appareil électroménager ,
puisque sa mise en marche est subordonnée à la position

.0129222

correcte de fermeture du couvercle, ce qui évite de fausses manoeuvres pouvant donner lieu à des accidents.

Revendications

1. Dispositif de commande d'un appareil électroménager dont la mise en marche est commandée par un interrupteur électrique (1) interne à l'appareil et qui est fermé par un couvercle amovible (2) retenu par un organe de fixation (3),

c a r a c t é r i s é en ce qu'il comprend un curseur (4) actionné manuellement à déplacement rectiligne coulissant entre des glissières parallèles (11,12), ce curseur (4) portant un doigt (6) perpendiculaire au plan des glissières (11,12) et destiné à l'actionnement de l'interrupteur (1), cet actionnement étant subordonné à l'interposition d'un élément intermédiaire formé par un bras élastique (5) qui peut basculer dans deux plans perpendiculaires entre eux, l'un de ces plans étant pratiquement parallèle au plan des glissières (11, 12) et l'autre perpendiculaire au plan des glissières(11,12), le déplacement dudit bras (5) dans le plan perpendiculaire au plan des glissières (11,12) étant provoqué par l'action d'un bossage (9) solidaire de l'organe (3) de fixation du couvercle (2), tandis que le déplacement dans l'autre plan est provoqué par l'actionnement du curseur de mise en marche (4).

2. Dispositif de commande selon la revendication 1, c a r a c t é r i s é en ce qu'au bras (5) est associé un second bras (18) portant un appendice (19) susceptible de retenir le doigt (6), donc le curseur 4, en leur position active d'actionnement de l'interrupteur (1).

3. Dispositif de commande selon la revendication 1 ou la revendication 2, c a r a c t é r i s é en ce que les glissières (11,12) sont formées par les bords d'une dépression du boîtier (14) de l'appareil.

4. Dispositif de commande selon la revendication 3,

c a r a c t é r i s é  en ce que le curseur (4) est retenu entre les glissières (11, 12) par des ergots (15,16) solidaires de ce curseur et engagés dans des fentes (13, 17) pratiquées dans la paroi de fond de la dépression du boîtier, ces ergots portant à cet effet des saillies latérales qui s'accrochent derrière ladite paroi de fond.

0129222

Fig 1

Fig 2

0129222

Fig 3

Fig 5

Fig 4

Fig 7

0129222

Fig 6

Fig 8

Fig 9

Fig 10